# EUROPÄISCHE PATENTSCHRIFT

(11) **EP 1 029 440 B1**
(45) Veröffentlichungstag und Bekanntmachung des Hinweises auf die Patenterteilung: **28.06.2006**
(21) Anmeldenummer: 00102594.9
(22) Anmeldetag: 08.02.2000
(51) Int. Cl.: A01F 15/08, G01G 19/08

(54) **Landwirtschaftliche Ballenpresse mit einer Wägeeinrichtung**
Agricultural baler with a weighing device
Presse à balles agricole avec dispositif de pesage

(30) Priorität: 17.02.1999 DE 19906611
(43) Veröffentlichungstag der Anmeldung: 23.08.2000
(73) Patentinhaber: Welger Maschinenfabrik GmbH, 38304 Wolfenbüttel (DE)
(72) Erfinder: Dörge, Ulrich, 38120 Braunschweig (DE); Wilkens, Dieter, Dr.-Ing., 38302 Wolfenbüttel-Ahlum (DE)

(56) Entgegenhaltungen:
- EP-A- 0 296 709
- DE-A- 4 436 128
- DE-A- 19 543 343
- DE-A- 19 725 699
- US-A- 3 172 492
- US-A- 4 362 097
- US-A- 5 615 544

## Beschreibung

Die Erfindung betrifft eine landwirtschaftliche Ballenpresse mit einem relativ zur Tragachse vertikalbeweglichen Pressraumgehäuse, welches durch Federn auf der Tragachse abgestützt ist.

Die vorstehend beschriebene Ballenpresse lässt sich der DE-A-197 25 699 entnehmen. Nachteilig ist, dass diese Ballenpresse keine Wägeeinrichtung für das Ballengewicht aufweist.

Die US-A-317 2 492 offenbart ein gefedertes Transportfahrzeug, bei der die Relativbewegung zwischen Fahrgestellrahmen und den Fahrzeugfedern zur Gewichtsermittlung gemessen wird. Hier werden als Messeinrichtung beispielsweise Hydrozylinder verwendet mit einem Druckmanometer als Anzeigeeinrichtung, was aufwendig ist und die Bauhöhe vergrößert.

Durch die US-PS 4.362.097 ist eine Rundballenpresse bekannt geworden, deren Radschwinge auf einer Seite schwenkbar am Pressraumgehäuse angelenkt und mit diesem durch einen Hydrozylinder verbunden ist. An den Hydrozylinder ist ein Manometer zur Druckmessung angeschlossen. Der Hydraulikdruck soll als Maß für das Gewicht des Ballens in der Rundballenpresse dienen. Nimmt das Ballengewicht zu, senkt sich das Pressraumgehäuse relativ zur Tragachse, wobei der Kolben in den Zylinder einfährt und der Druck ansteigt. Außer der Ölelastizität gestattet diese Einrichtung keine Federung des Pressraumgehäuses. Nachteilig ist die Anordnung an nur einer Pressenseite, was zu ungenauen Wägeergebnissen führt.

Der Erfindung liegt die Aufgabe zugrunde, die eingangs beschriebene Ballenpresse zu verbessem.

Diese Aufgabe wird erfindungsgemäß dadurch gelöst, dass die Ballenpresse eine Wägeeinrichtung mit Wegsensoren aufweist, welche den Abstand zwischen dem Pressraumgehäuse und der Tragachse messen und deren Signale ein Maß für das Ballengewicht darstellen. Diese erfindungsgemäße Ballenpresse zeichnet sich durch einen besonders einfachen Aufbau aus, weil einfache Wegsensoren den Abstand zwischen dem Pressraumgehäuse und der Tragachse messen. In der Praxis durchgeführte Wegmessungen zwischen Tragachse und Pressraumgehäuse haben überraschend gut auswertbare Wegänderungen über der Ballenformungszeit ergeben. Trotz diverser Störgrößen ist ein stetiger Anstieg der Messwerte mit zunehmendem Ballengewicht feststellbar, so dass Genauigkeitswerte der Ballenwägung von ca. 2 % durchaus erreichbar sind. Besonders vorteilhaft lässt sich die Erfindung an einer Rundballenpresse anwenden, weil sich bei Zunahme des Ballengewichtes die Schwerpunktrichtung nicht ändert, so dass keine Stützlastsensoren an der Zugdeichsel erforderlich sind.

In weiterer Ausgestaltung der Erfindung ist vorgesehen, dass die Einfederung des Pressraumgehäuses durch zwei im Abstand nebeneinander auf der Tragachse angeordnete Wegsensoren, z. B. induktive Tauchanker Wegaufnehmer, induktive oder kapazitive Analogsensoren oder potentiometrische Wegsensoren oder Wegtaster oder Seilzug-Wegsensoren gemessen wird. Hierdurch ist praktisch jedem Rad ein entsprechender Wegsensor zugeordnet. Wird das Leergewicht der Ballenpresse als Nullwert der Wägeeinrichtung gesetzt, ergibt sich nach Mittelwertbildung beider gemessener Weggrößen in der Auswerteelektronik unmittelbar das Ballengewicht an einer entsprechenden Ausgabeeinheit.

Nach einem weiteren Merkmal der Erfindung ist eine Korrektureinrichtung der durch Schiefstellung der Ballenpresse verfälschten Wägeergebnisse vorgesehen, welche mit der Auswerteelektronik verbunden ist. Dadurch lassen sich trotz Längs- und/oder Querneigung der Ballenpresse durch entsprechende Korrekturfaktoren in der Auswerteelektronik tatsächliche Ballengewichte ermitteln.

Um die Erfindung auch für Kolbenpressen anwenden zu können, bei denen sich der Massenschwerpunkt mit zunehmendem Ballengewicht verschiebt, werden die Deichselstützkräfte der Ballenpresse mit einem Sensor gemessen und zur Bestimmung des Ballengewichtes in der Auswerteelektronik berücksichtigt.

Besonders bedienerfreundlich lassen sich konstante, reproduzierbare Ballengewichte automatisch in einer Ballenpresse mit konstantem, zylindrischen Preßraum für Rundballen dadurch erreichen, daß die Auslösung einer Garn- oder Netzumhüllungsvorrichtung in Abhängigkeit vom Ballengewicht mittelbar oder unmittelbar durch die Wägeeinrichtung erfolgt, wenn das Preßraumgehäuse um ein Maß eingefedert ist, das dem gewünschten, voreinstellbaren Ballengewicht entspricht.

Da ohnehin auf jeder Pressenseite ein Wegsensor angeordnet ist, wird eine besonders einfache Ballenformanzeigevorrichtng vorgeschlagen, welche in Abhängigkeit von der durch die Wegsensoren gemessenen Einfederung auf jeder Seite des Preßraumgehäuses eine ungleichmäßige Befüllung des Preßraumes in den Seitenbereichen anzeigt, so daß der Bediener die Ballenpresse zur Erreichung einer gleichmäßigen Befüllung gegensteuern kann.

Eine Ausführung gemäß Anspruch 10 gestattet außerdem eine Ertragskartierung, welche insbesondere bei der Silage- und/oder Heugewinnung nützlich ist.

Da sowohl kontinuierlich während der Ballenbildung dynamisch gemessen werden kann als auch stationär bei Stillstand der Ballenpresse, ermöglicht diese Einrichtung Selbstkontrollwägungen. Versuche haben gezeigt, daß die dynamischen und statischen Wägungen nahezu identische Werte ergeben. Somit bietet die vorliegende Erfindung dem Lohnunternehmer neben einem gefederten Fahrwerk, welches Transportgeschwindigkeiten von über 50 km/h ermöglicht, durch relativ einfache Federwegsmessungen außer der Ballengewichtsermittlung zusätzlichen Bedienkomfort bis hin zur Kopplung der Gewichtsmessung mit GPS-Systemen bei sehr einfachen Weggebern.

Im Rahmen der Erfindung ist es auch möglich, statt der Wegmessung die Schwingungsfrequenzänderung des Feder/Massesystems Ballenpresse/Federung zu messen, die ebenfalls ein Maß für das Ballengewicht darstellt, da sich auch die Frequenz mit zunehmendem Ballengewicht ändert. Da die Eigenfrequenz z. B. der Rundballenpresse während des Betriebes nahezu konstant ist, werden auch auf diese Art und Weise brauchbare Gewichtsergebnisse erzielt.

Weitere Merkmale der Erfindung ergeben sich aus den Unteransprüchen.

Anhand der Zeichnung wird die erfindungsgemäße landwirtschaftliche Ballenpresse am Beispiel einer Rundballenpresse nachfolgend näher beschrieben. Es zeigen:
- Fig. 1: eine Rückansicht eines auf die Tragachse abgestützten Preßraumgehäuses einer Rundballenpresse gemäß der Erfindung und
- Fig. 2: ein Blockschaltbild einer Wägeeinrichtung mit Auswerteeinheit.

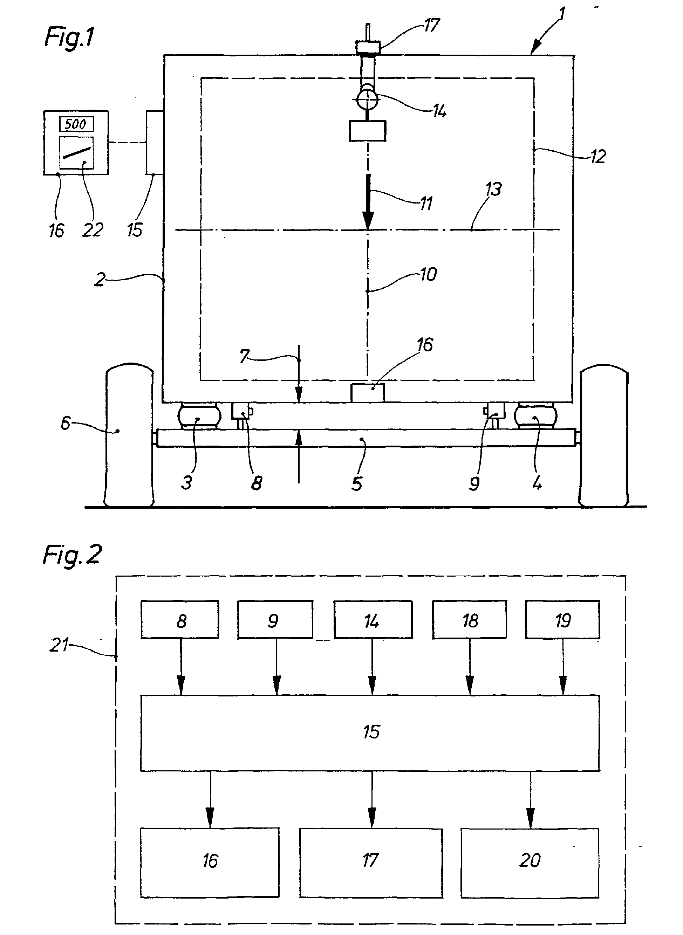

Die in Figur 1 als Beispiel für eine Ballenpresse gezeigte Rundballenpresse 1 besteht im wesentlichen aus einem Preßraumgehäuse 2 mit variablem oder konstantem Preßraum zur Herstellung zylindrischer Preßballen und ist mit einer nicht dargestellten Zugdeichsel an einen ebenfalls nicht dargestellten Schlepper kuppelbar.

Das Preßraumgehäuse 2 stützt sich in z. B. durch die DE 197 25 699.6 der Anmelderin bekannter Weise über Gummifedern 3, 4 auf einer Tragachse 5 mit Rädern 6 ab. Beim Befüllen der Rundballenpresse 1 verringert sich entsprechend dem Gewicht der aufgenommenen Gutmenge der Abstand 7 zwischen dem Preßraumgehäuse 2 und der Tragachse 5. Der der jeweiligen Einfederung entsprechende Abstand wird zur Anzeige des Ballengewichtes durch Wegsensoren 8, 9 erfaßt, die symmetrisch zur vertikalen Längsmittelebene 10 der Rundballenpresse 1 im Abstand nebeneinander jeweils benachbart zu den Gummifedern 3, 4 angeordnet sind.

Durch Auswertung der Abstandsänderung jedes einzelnen Wegsensors 8, 9 kann auf besonders einfache Weise eine ungleiche Ballenform angezeigt werden, die z. B. durch einseitige Befüllung der Rundballenpresse 1 verursacht wird.

Bei waagerechter Stellung der Rundballenpresse 1 greift im Pressenschwerpunkt eine senkrecht nach unten gerichtete Ballengewichtskraft 11 eines in Strichlinie dargestellten Rundballens 12 mit Zylindermittelachse 13 an. Um durch Längs- und/oder Querneigung der Rundballenpresse verfälschte Wägeergebnisse des Ballens zu korrigieren, ist in der vertikalen Längsmittelebene 10 der Rundballenpresse 1 ein kardanisch aufgehängtes Pendel 14 angeordnet. Es kann aber auch jeweils ein nicht dargestellter Längs- und ein Querneigungssensor oder ein handelsüblicher Inklinomat an der Rundballenpresse 1 angebracht sein. Beide Wegsensoren 8, 9 und das Pendel 14 stehen in Wirkverbindung mit einer elektronischen Auswerteeinheit 15, welche die Signale von den Wegsensoren 8, 9 und dem Pendel 14 aufarbeitet und das Ballengewicht in einer Ausgabeeinheit 16 anzeigt, abspeichert und/oder an eine Steuereinrichtung 17 zum Auslösen einer Pressenfunktion, insbesondere einer nicht dargestellten Umschnürungsvorrichtung weiterleitet. Ferner kann mit der Auswerteeinheit 15 ein Feuchtesensor 18 für das Erntegut verbunden sein zum automatischen Umrechnen des aufgenommenen Feuchtgutes in Ballentrockenmassegewichte sowie eine GPS Satellitennavigations-Empfangseinheit 19, um während der Ballenbildung erfaßte Gutmengen den jeweiligen geographischen Positionen der Rundballenpresse 1 zuzuordnen und in eine digitale Ertragskartierung umzurechnen für Anzeige und/oder Speicherung der Daten in einer Ertragskarte 20 oder Ballenortskarte.

Figur 2 zeigt ein Blockschaltbild einer vorteilhaften Ausgestaltung einer Wägeeinrichtung, die allgemein mit der Ziffer 21 gekennzeichnet ist. In diesem Fall befinden sich zwei Wegsensoren 8, 9, der Neigungssensor 14, der Feuchtesensor 16 sowie eine GPS-Antenne 17 an der Rundballenpresse 1, die jeweils ihre Signale der Auswerteeinheit 15 zuführen. Die Auswerteeinheit 15 oder die Ausgabeeinheiten 16, 17 können über eine nicht dargestellte Eingabemöglichkeit verfügen, über die z. B. Sollwerte für das Ballengewicht voreinstellbar sind. Die Auswerteeinheit 15 ermittelt bei Gutzufuhr aus den Signalen das jeweilige Ballengewicht, die Trockenmassegewichte, die Ballenform, die Ballenanzahl bzw. den Ertrag/Schlag und positionsgenaue Werte der aufgenommenen Gutmenge und/oder elektronisch gespeicherte Ballenablageorte für eine spätere Weiterbehandlung der Ballen und stellt diese an einer elektronischen Ausgabeeinheit 16, wie Display, Drucker, einem elektronischen Speicher oder einer Steuereinrichtung 17 für Schaltfunktionen der Ballenpresse zur Verfügung. Besonders komfortabel ist die Wägeeinrichtung 21 für Rundballenpressen 1 mit Konstantkammer, da sich z. B. für eine optimale LKW-Ausladung Ballengewichte voreinstellen lassen, die durch automatische, gewichtsabhängige Auslösung der Umschnürungseinrichtung auch erreicht werden. Vorteilhaft für eine exakte Ballenzylinderform ist auch die gewichtsabhängige Erfassung der Seitenbefüllung der Rundballenpresse 1, da der Bediener recht früh gegensteuem kann, um diese zu erreichen. Im Rahmen der Erfindung lassen sich dieselben Vorteile auch dann erzielen, wenn der Auswerteeinheit 15 statt der Wegänderung die Frequenzänderung des Schwingungssystems zugeführt wird, die ebenfalls in Abhängigkeit vom Ballengewicht erfolgt.

## Patentansprüche

1. Landwirtschaftliche Ballenpresse (1) mit einem relativ zur Tragachse (5) vertikalbeweglichen Pressraumgehäuse (2), welches durch Federn (3, 4) auf der Tragachse (5) abgestützt ist, **dadurch gekennzeichnet, dass** die Ballenpresse (1) eine Wägeeinrichtung (21) mit Wegsensoren (8, 9) aufweist, welche den Abstand (7) zwischen dem Pressraumgehäuse (2) und der Tragachse (5) messen und deren Signale ein Maß für das Ballengewicht darstellen.

2. Landwirtschaftliche Ballenpresse nach Anspruch 1, **dadurch gekennzeichnet, daß** die Einfederung des Preßraumgehäuses (2) durch zwei im Abstand nebeneinander auf der Tragachse (5) angeordnete Wegsensoren (8, 9), wie induktive Tauchanker Wegaufnehmer, induktive oder kapazitive Analogsensoren oder potentiometrische Wegsensoren oder Wegtaster oder Seilzug-Wegsensoren gemessen wird.

3. Landwirtschaftliche Ballenpresse nach Anspruch 1 oder 2, **dadurch gekennzeichnet, daß** die Wegsensoren (8, 9) mit einer Auswerteelektronik (15) verbunden sind, welche als Ausgabeeinheit (16) wenigstens ein Display für die Gewichtsanzeige und/oder einen Druckeranschluß aufweist.

4. Landwirtschaftliche Ballenpresse nach einem der vorhergehenden Ansprüche, **dadurch gekennzeichnet, daß** eine Korrektureinrichtung (14) der durch Schiefstellung der Ballenpresse (1) verfälschten Wägeergebnisse vorgesehen ist, welche mit der Auswerteelektronik (15) verbunden ist.

5. Landwirtschaftliche Ballenpresse nach Anspruch 4, **dadurch gekennzeichnet, daß** die Korrektureinrichtung ein kardanisch aufgehängtes Pendel (14) aufweist, dessen Schiefstellung in bezug zu einer Lotrechten oder in bezug zu einer zur Lotrechten winkelfest angeordneten Achse ein Maß für die Größe der vorzunehmenden Korrektur ist.

6. Landwirtschaftliche Ballenpresse nach einem oder mehreren der vorhergehenden Ansprüche, insbesondere Kolbenpresse, welche durch eine Deichsel an einen Schlepper kuppelbar ist, **dadurch gekennzeichnet, daß** die Deichselstützkräfte der Ballenpresse (1) mit einem Sensor gemessen und zur Bestimmung des Ballengewichtes in der Auswerteelektronik (15) berücksichtigt werden.

7. Landwirtschaftliche Ballenpresse nach einem oder mehreren der Ansprüche 1 bis 6, **dadurch gekennzeichnet, daß** die Auswerteelektronik (15) mit einem Feuchtesensor (16) zusammenwirkt, dessen Signale zur Umrechnung der aufgenommenen Gutmasse in Trockenmassegewichtswerte dienen.

8. Landwirtschaftliche Ballenpresse nach einem oder mehreren der Ansprüche 1 bis 7 mit konstantem zylindrischen Preßraum für Rundballen, **dadurch gekennzeichnet, daß** die Auslösung einer Garn- oder Netzumhüllungsvorrichtung in Abhängigkeit vom Ballengewicht mittelbar oder unmittelbar durch die Wägeeinrichtung (21) erfolgt, wenn das Preßraumgehäuse (2) um ein Maß eingefedert ist, das dem gewünschten, voreinstellbaren Ballengewicht entspricht.

9. Landwirtschaftliche Ballenpresse nach einem oder mehreren der vorhergehenden Ansprüche 1 bis 8, **dadurch gekennzeichnet, daß** eine Ballenformanzeigevorrichtung (22) vorgesehen ist, welche in Abhängigkeit von der durch die Wegsensoren (8, 9) gemessenen Einfederung auf jeder Seite des Preßraumgehäuses (2) eine ungleichmäßige Befüllung des Preßraumes in den Seitenbereichen anzeigt.

10. Landwirtschaftliche Ballenpresse nach einem der vorhergehenden Ansprüche 1 bis 9, **dadurch gekennzeichnet, daß** die Wägeeinrichtung (21), insbesondere die Auswerteelektronik (15) mit einer Vorrichtung (17) zur Ermittlung der aktuellen geographischen Position der Ballenpresse (1), wie beispielsweise ein an sich bekanntes GPS-System gekoppelt ist, welche während der Ballenbildung die aktuellen Ballengewichte zugehörigen Positionswerten der Ballenpresse (1) zuordnet und positionsgenaue Gewichtswerte der aufgenommenen Gutmenge in eine digitale Ertragskartierung umrechnet und in an sich bekannten elektronischen Speicherelementen (20) speichert für eine elektronische Anzeige und/oder Auswertung.

11. Landwirtschaftliche Ballenpresse nach einem oder mehreren der Ansprüche 1 bis 10, **dadurch gekennzeichnet, daß** die Ballenwägung kontinuierlich während der Ballenbildung und/oder während der Umhüllung des fertigen Ballens bei Stillstand der Ballenpresse, insbesondere Rundballenpresse, erfolgt, wobei gleichzeitig mit Auslösung der Umhüllungsvorrichtung die Wägeeinrichtung eingeschaltet wird.

## Claims

1. Agricultural baler (1) having a pressing chamber housing (2) which can be moved vertically relative to the carrying axle (5) and is supported on the carrying axle (5) by means of springs (3, 4), **characterised in that** the baler (1) has a weighing device (21) with distance sensors (8, 9) which measure the spacing (7) between the pressing chamber housing (2) and the carrying axle (5) and the signals of which represent a measure of the weight of the bale.

2. Agricultural baler according to claim 1, **characterised in that** the spring deflection of the pressing chamber housing (2) is measured by two distance sensors (8, 9) which are disposed adjacently at a spacing on the carrying axle (5), such as inductive solenoid plunger distance sensors, inductive or capacitive analogue sensors or potentiometric distance sensors or distance scanners or bowden cable distance sensors.

3. Agricultural baler according to claim 1 or 2, **characterised in that** the distance sensors (8, 9) are connected to an electronic evaluation unit (15) which has at least one display for displaying the weight and/or a printer connection as output unit (16).

4. Agricultural baler according to one of the preceding claims, **characterised in that** a correction device (14) is provided for weighing results which are falsified by inclined positioning of the baler (1), which correction device is connected to the electronic evaluation unit (15).

5. Agricultural baler according to claim 4, **characterised in that** the correction device has a pendulum (14) suspended on gimbals, the inclined positioning of which, relative to a perpendicular or relative to an axle which is disposed at a fixed angle relative to the perpendicular, is a measure of the size of the correction to be undertaken.

6. Agricultural baler according to one or more of the preceding claims, in particular a piston baler which can be coupled to a tractor by means of a drawbar, **characterised in that** the drawbar support forces of the baler (1) are measured with a sensor and taken into account in the electronic evaluation unit (15) in order to determine the weight of the bale.

7. Agricultural baler according to one or more of the claims 1 to 6, **characterised in that** the electronic evaluation unit (15) cooperates with a moisture sensor (16), the signals of which serve for conversion of the received material into dry material weight values.

8. Agricultural baler according to one or more of the claims 1 to 7, having a constant cylindrical pressing chamber for round bales, **characterised in that** the actuation of a twine- or net-wrapping device is effected indirectly or directly by the weighing device (21), dependent upon the weight of the bale, when the pressing chamber housing (2) is spring-deflected by an amount which corresponds to the desired pre-settable weight of the bale.

9. Agricultural baler according to one or more of the preceding claims 1 to 8, **characterised in that** a bale shape display device (22) is provided which displays non-uniform filling of the pressing chamber in the lateral regions dependent upon the spring deflection at each side of the pressing chamber housing (2) measured by the distance sensors (8, 9).

10. Agricultural baler according to one of the preceding claims 1 to 9, **characterised in that** the weighing device (21), in particular the electronic evaluation unit (15) is coupled to a mechanism (17) for determining the actual geographical position of the baler (1), such as for example a GPS system which is known per se, which mechanism assigns the current bale weights to associated position values of the baler (1) during formation of the bale and converts positionally accurate weight values of the received quantity of material into digital yield charting and stores it for electronic display and/or evaluation in electronic memory elements (20) which are known per se.

11. Agricultural baler according to one or more of the claims 1 to 10, **characterised in that** the bale weighing is effected continuously during the bale formation and/or during wrapping of the finished bale when the baler, in particular a round baler, is stopped, the weighing device being switched at the same time as actuation of the wrapping device.

## Revendications

1. Presse à balles (1) agricole comportant un carter de la chambre de compactage (2), qui est mobile verticalement par rapport à l'essieu de support (5) et qui est supporté par des ressorts (3, 4) sur l'essieu de support (5), **caractérisée en ce que** la presse à balles (1) comporte un dispositif de pesage (21) avec des capteurs de distance (8, 9), qui mesurent la distance (7) entre le carter de la chambre de compactage (2) et l'essieu de support (5) et dont les signaux constituent un critère pour le poids de la balle.

2. Presse à balles agricole selon la revendication 1, **caractérisée en ce que** le débattement du ressort du carter de la chambre de compactage (2) est mesuré par deux capteurs de distance (8, 9), agencés à distance l'un à côté de l'autre sur l'essieu de support (5), tels que des capteurs inductifs à noyau plongeur, des capteurs analogiques inductifs ou capacitifs ou des capteurs de distance à potentiomètre ou des palpeurs de distance ou des capteurs de distance à câble de traction.

3. Presse à balles agricole selon la revendication 1 ou 2, **caractérisée en ce que** les capteurs de distance (8, 9) sont reliés à un dispositif électronique d'analyse (15), qui comporte au moins un écran, formant une unité d'édition (16) destinée à afficher le poids, et/ou un port d'imprimante.

4. Presse à balles agricole selon l'une des revendications précédentes, **caractérisée en ce qu'**il est prévu un dispositif de correction (14) des résultats de pesage, faussés par une position inclinée de la presse à balles (1), lequel dispositif est relié au dispositif électronique d'analyse (15).

5. Presse à balles agricole selon la revendication 4, **caractérisée en ce que** le dispositif de correction comporte un balancier (14) suspendu par joints cardan, dont la position inclinée par rapport à la verticale ou par rapport à un axe agencé en angle fixe avec la verticale est un critère de la valeur de la correction à effectuer.

6. Presse à balles agricole selon une ou plusieurs des revendications précédentes, en particulier une presse à piston, qui peut être attelée à un tracteur au moyen d'une barre d'attelage, **caractérisé en ce que** les forces d'appui sur l'attelage de la presse à balles (1) sont mesurées par un capteur et sont prises en compte dans le dispositif électronique d'analyse (15) pour déterminer le poids de la balle.

7. Presse à balles agricole selon une ou plusieurs des revendications 1 à 6, **caractérisée en ce que** le dispositif électronique d'analyse (15) coopère avec un capteur d'humidité (16), dont les signaux sont utilisés pour convertir la masse du produit enregistrée en valeurs de poids de la masse sèche.

8. Presse à balles agricole selon une ou plusieurs des revendications 1 à 7, comportant une chambre de compactage cylindrique constante pour balles rondes, **caractérisée en ce que** l'activation d'un dispositif d'enrubannage par fil ou filet est effectuée en fonction du poids de la balle indirectement ou directement par le dispositif de pesage (21), lorsque le ressort de suspension du carter de la chambre de compactage (2) est comprimé selon une valeur qui correspond au poids de la balle prédéfini souhaité.

9. Presse à balles agricole selon une ou plusieurs des revendications 1 à 8, **caractérisée en ce qu'**il est prévu un dispositif d'affichage de la forme de la balle (22) qui, en fonction du débattement du ressort mesuré par les capteurs de distance (8, 9) sur chaque côté du carter de la chambre de compactage (2), affiche un remplissage non uniforme de la chambre de compactage dans les zones latérales.

10. Presse à balles agricole selon l'une quelconque des revendications 1 à 9, **caractérisée en ce que** le dispositif de pesage (21), en particulier le dispositif électronique d'analyse (15) est couplé à un dispositif (17) destiné à déterminer la position géographique actuelle de la presse à balles (1), tel qu'un système GPS connu en soi, lequel pendant la formation de la balle associe les poids actuels de la balle à des valeurs de positionnement correspondantes de la presse à balles (1) et convertit des valeurs de poids en fonction du positionnement exact de la quantité de matière reçue en une carte de rendement numérique et les stocke dans des éléments de mémoire (20) électroniques connus en soi pour un affichage et/ou une analyse électroniques.

11. Presse à balles agricole selon une ou plusieurs des revendications 1 à 10, **caractérisée en ce que** le pesage de la balle est effectué en continu pendant la formation de la balle et/ou pendant l'enrubannage de la balle finie lors de l'immobilisation de la presse à balles, en particulier une presse à balles rondes, le dispositif de pesage étant activé simultanément avec l'activation du dispositif d'enrubannage.
